# EUROPEAN PATENT APPLICATION

(11) **EP 2 136 500 A1**
(43) Date of publication of application: **23.12.2009**
(21) Application number: 08739920.0
(22) Date of filing: 04.04.2008
(51) Int. Cl.: H04L 1/16, H04L 29/08

(54) **RETRANSMISSION CONTROL METHOD AND TRANSMISSION SIDE DEVICE**

(30) Priority: 06.04.2007 JP 2007100518
(71) Applicant: NTT DoCoMo, Inc., Chiyoda-ku Tokyo 100-6150 (JP)
(72) Inventor: UMESH, Anil, Tokyo 100-6150 (JP); ISHII,Hiroyuki, Tokyo 100-6150 (JP)
(74) Representative: HOFFMANN EITLE
(86) International application number: PCT/JP2008/056814
(87) International publication number: WO 2008/126809

(57) **Abstract**

In a retransmission control method, each of a transmitting-side apparatus and a receiving-side apparatus includes a first layer and a second layer; and first retransmission control processing is performed between the first layer of the transmitting-side apparatus and the first layer of the receiving-side apparatus, and second retransmission control processing is performed between the second layer of the transmitting-side apparatus and the second layer of the receiving-side apparatus; the first layer of the transmitting-side apparatus determines whether or not specific user data is under the second retransmission control processing, when receiving a retransmission request for the specific user data from the first layer of the receiving-side apparatus, during the first retransmission control processing; and the first layer of the transmitting-side apparatus does not retransmit the specific user data, when determining that the specific user data is under the second retransmission control processing.

## Description

### TECHNICAL FIELD

The present invention relates to a retransmission control method for performing retransmission control processing for user data between a transmitting-side apparatus and a receiving-side apparatus, and also to the transmitting-side apparatus.

### BACKGROUND ART

In 3GPP, which is an organization that sets standards for third generation mobile communications systems, a study collectively termed as LTE (Long Term Evolution) has been conducted for achieving a drastic improvement of transmission speed and reduction of transmission delay in a radio access network (RAN); and formulation of standard specifications of the elemental technologies related to the study has been in progress.

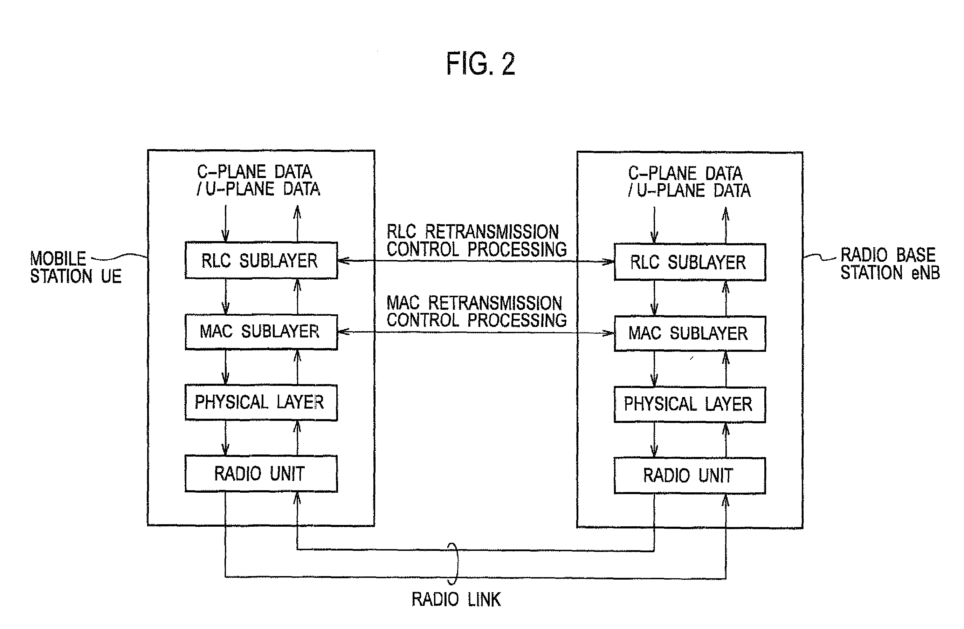

As shown in FIG. 2, the radio access network (E-UTRAN: Evolved Universal Terrestrial RAN) in an LTE mobile communication system includes a mobile station UE (User Equipment) and a radio base station eNB (E-UTRAN Node B). This system is configured in such a way that the mobile station UE and the radio base station eNB communicate with each other via a radio link (RL).

Moreover, each of the mobile station UE and the radio base station eNB is configured to terminate an RLC (Radio Link Control) sublayer, a MAC (Medium Access Control) sublayer and a physical (PHY: Physical) layer.

In addition, a transmitting-side apparatus (mobile station UE or radio base station eNB) is configured to perform RLC processing, MAC processing and PHY processing sequentially for data to be transmitted and then to transmit the data as radio signals from a radio unit.

Meanwhile, a receiving-side apparatus (mobile station UE or radio base station eNB) is configured to extract the transmitted data by performing PHY processing, MAC processing and RLC processing sequentially for the radio signals received by a radio unit.

Here, the data to be transmitted includes user data (U-plane data) generated by an application or the like used by the user, and control data (C-plane data) used in controlling the mobile communication system, such as RRC (Radio Resource Control) signaling and NAS (Non Access Stratum) signaling.

Moreover, this system is configured in such a way that RLC retransmission control processing is performed between the RLC sublayer of the transmitting-side apparatus and the RLC sublayer of the receiving-side apparatus, and that HARQ (Hybrid Automatic Repeat Request) retransmission control processing is performed between the MAC sublayer of the transmitting-side apparatus and the MAC sublayer of the receiving-side apparatus.

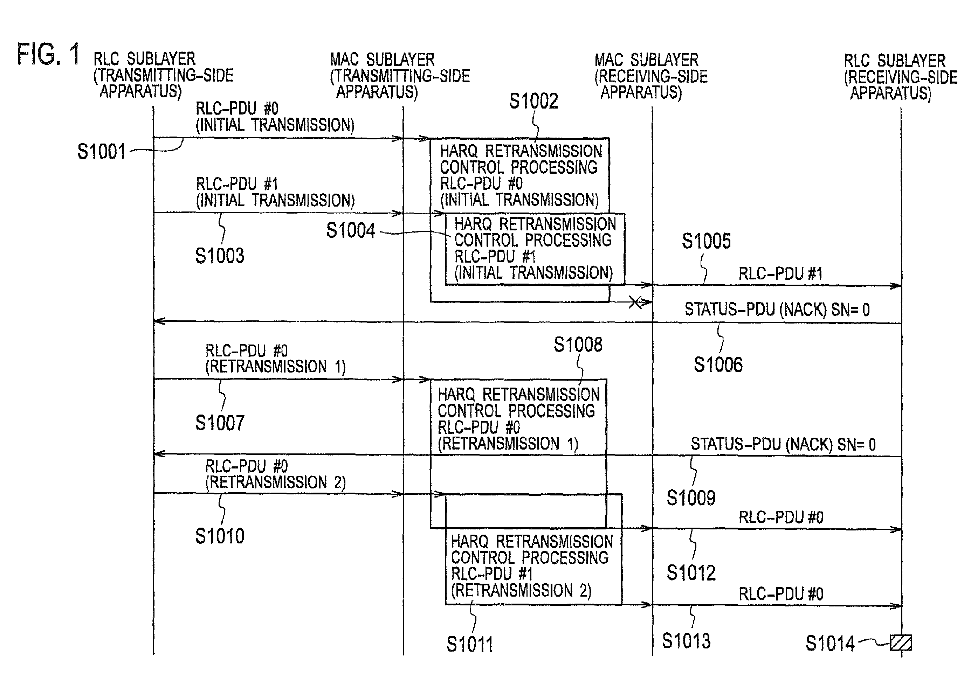

Here, with reference to FIG. 1, a description will be given of retransmission control processing in an existing LTE mobile communication system.

As shown in FIG. 1, in step S1001, the RLC sublayer of the transmitting-side apparatus transmits an RLC-PDU #0 (initial transmission) to the MAC sublayer of the transmitting-side apparatus.

In step S1002, the MAC sublayer of the transmitting-side apparatus transmits the RLC-PDU #0 (initial transmission) to the MAC sublayer of the receiving-side apparatus by using HARQ retransmission control processing.

In step S1003, the RLC sublayer of the transmitting-side apparatus transmits an RLC-PDU #1 (initial transmission) to the MAC sublayer of the transmitting-side apparatus, while the HARQ retransmission control processing is being performed in step S1002 (in other words, before the transmission processing of the RLC-PDU #0 is completed).

In step S1004, the MAC sublayer of the transmitting-side apparatus transmits the RLC-PDU #1 (initial transmission) to the MAC sublayer of the receiving-side apparatus by using HARQ retransmission control processing.

In step S1005, the MAC sublayer of the receiving-side apparatus that has succeeded in reception processing of the RLC-PDU #1 (initial transmission) transmits the RLC-PDU #1 (initial transmission) to the RLC sublayer of the receiving-side apparatus.

Thereafter, in a case where a predetermined trigger occurs after the HARQ retransmission control processing in step S1002 ends up with a failure, the RLC sublayer of the receiving-side apparatus transmits a "STATUS-PDU (NACK) SN = 0", in step S1006, which requests retransmission of the RLC-PDU #0 to the RLC sublayer of the transmitting-side apparatus.

In step S1007, the RLC sublayer of the transmitting-side apparatus transmits the RLC-PDU #0 (retransmission 1) to the MAC sublayer of the transmitting-side apparatus in response to the "STATUS-PDU (NACK) SN = 0". Then, in step S1008, the MAC sublayer of the transmitting-side apparatus transmits the RLC-PDU #0 (retransmission 1) to the MAC sublayer of the receiving-side apparatus by using HARQ retransmission control processing.

Thereafter, in a case where a predetermined trigger occurs before the HARQ retransmission control processing in step S1008 ends up with a failure, the RLC sublayer of the receiving-side apparatus transmits a "STATUS-PDU (NACK) SN = 0", in step S1009, which requests retransmission of the RLC-PDU #0 to the RLC sublayer of the transmitting-side apparatus.

In step S1010, the RLC sublayer of the transmitting-side apparatus transmits the RLC-PDU #0 (retransmission 2) to the MAC sublayer of the transmitting-side apparatus in response to the "STATUS-PDU (NACK) SN = 0". Then, in step S1011, the MAC sublayer of the transmitting-side apparatus transmits the RLC-PDU #0 (retransmission 2) to the MAC sublayer of the receiving-side apparatus by using HARQ retransmission control processing.

Thereafter, in step S1012, the MAC sublayer of the receiving-side apparatus that has succeeded in reception processing of the RLC-PDU #0 (retransmission 1) transmits the RLC-PDU #1 (retransmission 1) to the RLC sublayer of the receiving-side apparatus.

In addition, in step S1013, the MAC sublayer of the receiving-side apparatus that has succeeded in reception processing of the RLC-PDU #0 (retransmission 2) transmits the RLC-PDU #0 (retransmission 2) to the RLC sublayer of the receiving-side apparatus.

Then, in step S1014, the RLC sublayer of the receiving-side apparatus discards the redundantly received RLC-PDU #0 (retransmission 2).
Non-Patent Document 1: RLC Specification of IMT-2000: 3GPP TS 25.322 V6.9.0 (2006-09)
Non-Patent Document 2: LTE Stage 2 Specification: 3GPP TS 36.300 V8.0.0 (2007-03)

### DISCLOSURE OF THE INVENTION

However, in the existing LTE mobile communication system, as described above, in a case where, due to delay caused by HARQ retransmission control processing or scheduling processing at the MAC sublayer, the RLC sublayer of the receiving-side apparatus transmits a STATUS-PDU (NACK) before the RLC-PDU #0 (retransmission 1) retransmitted by the RLC sublayer of the transmitting-side apparatus is delivered to the RLC sublayer of the receiving-side apparatus, the RLC sublayer of the transmitting-side apparatus redundantly transmits the RLC-PDU #0 (retransmission 2). Thus, there arises a problem that the bandwidth of the radio link is unnecessarily consumed in this case.

In this respect, the present invention has been made in view of the aforementioned problem. An object of the present invention is to provide a retransmission control method and a transmitting-side apparatus that make it possible to prevent redundant retransmission of the RLC-PDU #0 and thus to suppress unnecessary consumption of the bandwidth of the radio link in the retransmission control processing in a conventional LTE mobile communication system.

A first aspect of the present invention is summarized as a retransmission control method for performing retransmission control processing for user data between a transmitting-side apparatus and a receiving-side apparatus, wherein each of the transmitting-side apparatus and the receiving-side apparatus includes a first layer and a second layer that is of a lower layer to the first layer; and first retransmission control processing is performed between the first layer of the transmitting-side apparatus and the first layer of the receiving-side apparatus, and second retransmission control processing is performed between the second layer of the transmitting-side apparatus and the second layer of the receiving-side apparatus; the method including the steps of: determining, at the first layer of the transmitting-side apparatus, whether or not specific user data is under the second retransmission control processing, when receiving a retransmission request for the specific user data from the first layer of the receiving-side apparatus, during the first retransmission control processing; and not retransmitting, at the first layer of the transmitting-side apparatus, the specific user data, when determining that the specific user data is under the second retransmission control processing.

In the first aspect, the first layer can be an RLC sublayer; and the second layer can be a MAC sublayer.

In the first aspect, the second retransmission control processing can be HARQ retransmission control processing.

A second aspect of the present invention is summarized as a transmitting-side apparatus configured to perform retransmission control processing for user data, with a receiving-side apparatus, including: a first layer; and a second layer that is of a lower layer to the first layer; wherein first retransmission control processing is configured to be performed with a first layer of the receiving-side apparatus, and second retransmission control processing is configured to be performed with a second layer of the receiving-side apparatus; the first layer of the transmitting-side apparatus is configured to determine whether or not specific user data is under the second retransmission control processing, when receiving a retransmission request for the specific user data from the first layer of the receiving-side apparatus, during the first retransmission control processing, and the first layer of the transmitting-side apparatus is configured not to retransmit the specific user data, when determining that the specific data is under the second retransmission control processing.

In the second aspect, the first layer of the transmitting-side apparatus can be an RLC sublayer; and the second layer of the transmitting-side apparatus can be a MAC sublayer.

In the second aspect, the second retransmission control processing can be HARQ retransmission control processing.

As described above, according to the present invention, it is possible to provide a retransmission control method and a transmitting-side apparatus that make it possible to prevent redundant retransmission of the RLC-PDU #0 and thus to suppress unnecessary consumption of the bandwidth of the radio link in the retransmission control processing in a conventional LTE mobile communication system.

### BRIEF DESCRIPTION OF THE DRAWINGS

[FIG. 1] FIG. 1 is a sequence diagram showing operations of an LTE mobile communication system.
[FIG. 2] FIG. 2 is a diagram showing a protocol layer configuration in a radio access network of a mobile communication system according to a first embodiment of the present invention.
[FIG. 3] FIG. 3 is a functional block diagram of an RLC sublayer in a mobile station and a radio base station according to the first embodiment of the present invention.
[FIG. 4] FIG. 4 is a diagram for describing re-segmentation processing to be performed in the RLC sublayer in a mobile station and a radio base station according to the first embodiment of the present invention.
[FIG. 5] FIG. 5 is a diagram showing an example of a format of an RLC-data-PDU to be generated by an RLC sublayer in the mobile station and the radio base station according to the first embodiment of the present invention.
[FIG. 6] FIG. 6 is a diagram showing an example of a format of an RLC-data-Sub-PDU to be generated by an RLC sublayer in the mobile station and the radio base station according to the first embodiment of the present invention.
[FIG. 7] FIG. 7 is a diagram showing an example of a format of a STATUS-PDU to be generated by an RLC sublayer in a mobile station and a radio base station according to the first embodiment of the present invention.
[FIG. 8] FIG. 8 is a sequence diagram showing operations of the mobile communication system according to the first embodiment of the present invention.
[FIG. 9] FIG. 9 is a flowchart showing an operation of an RLC sublayer in a mobile station and a radio base station according to the first embodiment of the present invention.

### BEST MODE FOR CARRYING OUT THE INVENTION

### (Configuration of Mobile Communication System According to First Embodiment of the Present Invention)

A description will be given of a configuration of a mobile communication system according to a first embodiment of the present invention with reference to FIGS. 2 to 7.

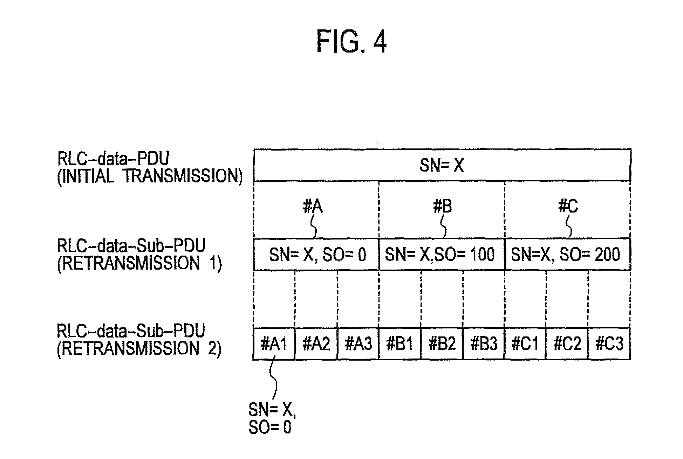

Note that, in this embodiment, the description will be given of a mobile communication system including an LTE/SAE (System Architecture Evolution) architecture for which standardization by the 3GPP has been in progress, as an example, as shown in FIG. 4, but the present invention is not limited to the mobile communication system, and is applicable to a mobile communication system including another architecture.

In addition, as shown in FIG. 2, this embodiment is configured in such a way that RLC retransmission control processing (first retransmission control processing) is performed between the RLC sublayer (first layer) of the transmitting-side apparatus and the RLC sublayer (first layer) of the receiving-side apparatus, and that HARQ retransmission control processing (second retransmission control processing) is performed between the MAC sublayer (second layer) of the transmitting-side apparatus and the MAC sublayer (second layer) of the receiving-side apparatus.

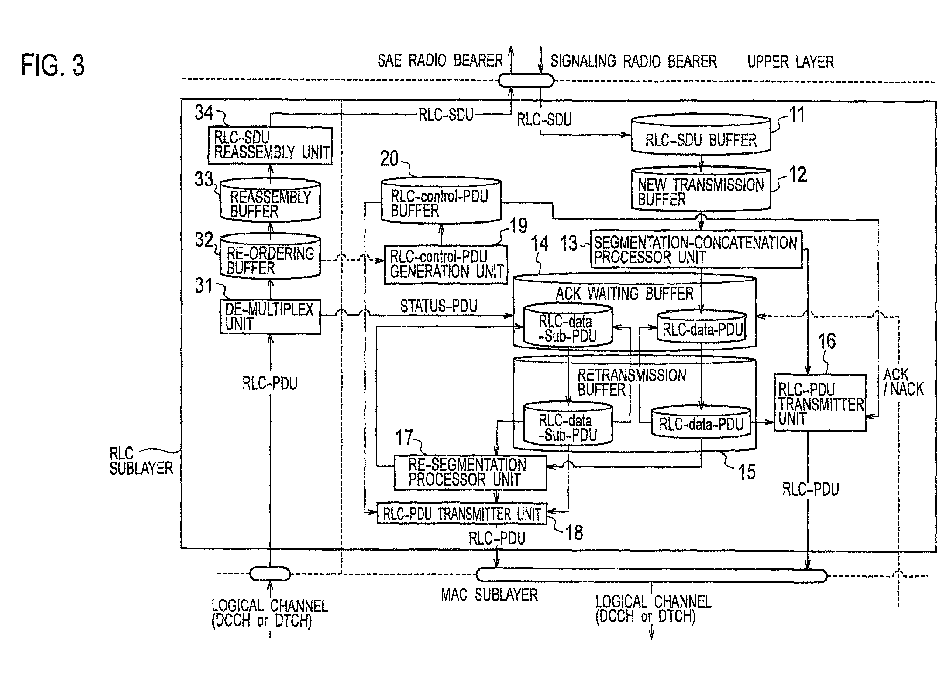

A description will be given of a functional configuration of an RLC sublayer of Acknowledge mode (AM) (hereinafter, referred to as RLC sublayer) with reference to FIG. 3.

Note that, a part of or all of the functions (modules) constituting the RLC sublayer shown in FIG. 3 may be implemented by hardware or software on an IC chip.

For example, on an IC chip, functions (modules) constituting a MAC sublayer and a physical layer for which simple and high speed processing is generally required may be configured to be implemented by hardware, and functions (modules) constituting the RLC sublayer for which complex processing is generally required may be configured to be implemented by software.

In addition, a function (module) constituting the physical layer, a function (module) constituting the MAC sublayer and a function (module) constituting the RLC sublayer may be implemented on the same IC chip, or may be implemented on different IC chips, respectively.

Hereinafter, an example of a configuration of the RLC sublayer in the mobile communication system according to this embodiment will be shown with reference to FIG. 3.

As shown in FIG. 3, the RLC sublayer includes an RLC-SDU buffer 11, a new transmission buffer 12, a segmentation-concatenation processor unit 13, an ACK waiting buffer 14, a retransmission buffer 15, an RLC-PDU transmitter unit 16, a re-segmentation processor unit 17, an RLC-PDU transmitter unit 18, an RLC-control-PDU generation unit 19, an RLC-control-PDU buffer 20, a de-multiplex unit 31, a reordering buffer 32, a reassembly buffer 33 and an RLC-SDU reassembly unit 34.

The RLC-SDU buffer 11 is configured to store an RLC-SDU received from an upper layer therein.

The new transmission buffer 12 is configured to copy the RLC-SDU stored in the RLC-SDU buffer 11 and then to store the RLC-SDU therein.

The segmentation-concatenation processor unit 13 is configured to perform segmentation processing or concatenation processing for the RLC-SDU (or a part thereof) stored in the new transmission buffer 12, and thereby to generate an RLC-data-PDU whose size becomes the largest within a range of an allowable amount of transmission data notified from a MAC sublayer along with a notification, in a case where a data transmission event is notified by the MAC sublayer.

In addition, the segmentation-concatenation processor unit 13 is configured to transmit the generated RLC-data-PDU to the RLC-PDU transmitter unit 16, and also to cause the generated RLC-data-PDU to be stored in the ACK waiting buffer 14.

The ACK waiting buffer 14 is configured to store, therein, the RLC-data-PDU from the segmentation-concatenation processor unit 13, an RLC-data-PDU or an RLC-data-Sub-PDU from the retransmission waiting buffer 15, and an RLC-data-Sub-PDU from the re-segmentation processor unit 17.

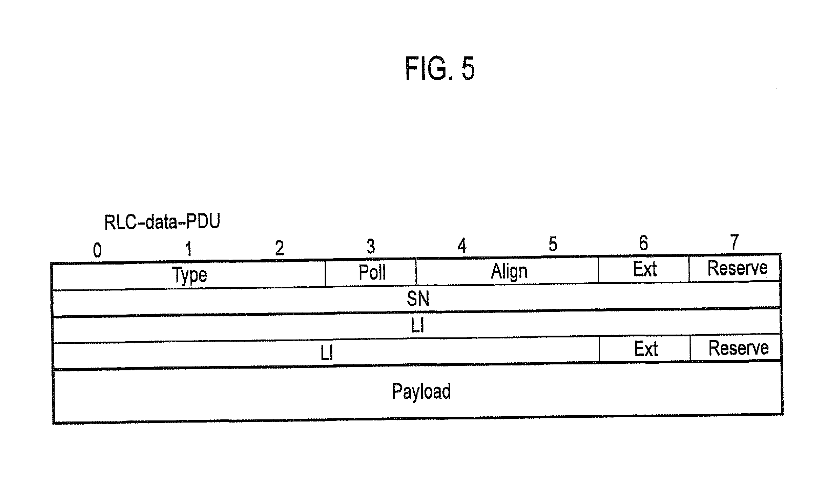

FIG. 5 shows a format example of the RLC-data-PDU used in the mobile communication system according to this embodiment.

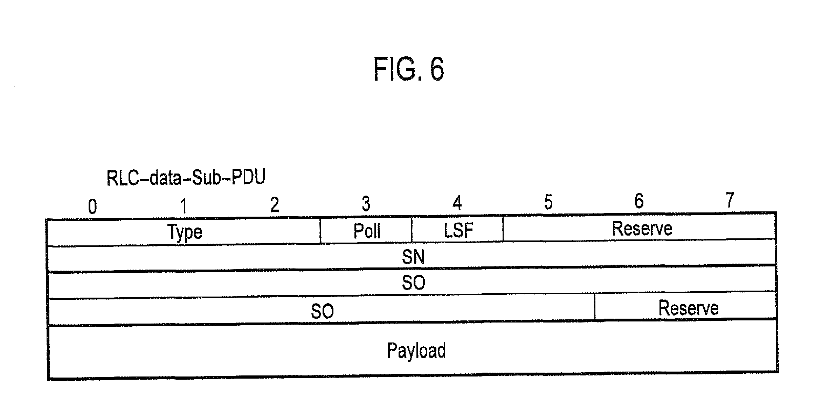

FIG. 6 shows a format example of the RLC-data-Sub-PDU used in the mobile communication system according to this embodiment.

As shown in FIG. 5, the header portion of the RLC-data-PDU has a "Type" field, a "Poll" field, an "Align" field, an "Ext" field, an "SN" field and an "LI" field.

In addition, as shown in FIG. 6, the header portion of the RLC-data-Sub-PDU includes a "Type" field, a "Poll" field, an "LSF (Last Segment Flag)" field, an "SN" field and an "SO (Segment Offset)" field.

The "Type" field is a field showing a type of the RLC-PDU. For example, RLC-data-PDU, RLC-data-Sub-PDU, RLC-control-PDU or the like may be set in the "Type" field as the type of the RLC-PDU.

The "Poll" field is a field indicating whether or not transmission of a STATUS-PDU is requested to the RLC sublayer of the reoeiving-side apparatus.

The "Align" field is a field indicating whether or not the first byte of the RLC-data-PDU is the first byte of the RLC-SDU, and also whether or not the last byte of the RLC-data-PDU is the last byte of the RLC-SDU.

The "Ext" field is a field indicating whether or not an extension header is subsequent to the header portion of this RLC-data-PDU.

The "SN" field is a field showing the sequence number of the RLC-data-PDU, when included in an RLC-data-PDU, and is a field showing the sequence number of the RLC-data-PDU to which the RLC-data-Sub-PDU is related, when included in an RLC-data-Sub-PDU.

The "LI" field is a field showing the position of the last byte of the RLC-SDU in a "Payload" portion in the RLC-data-PDU.

The "LSF" field is a field indicating whether or not the RLC-data-Sub-PDU is the last RLC-data-Sub-PDU in the RLC-data-PDU to which the RLC-data-Sub-PDU is related.

The "SO" field is a field showing which byte in the RLC-data-PDU to which the RLC-data-Sub-PDU is related to, the first byte of the "Payload" portion of the RLC-data-Sub-PDU is.

The ACK waiting buffer 14 is configured to determine whether or not retransmission for the stored RLC-data-PDU or RLC-data-Sub-PDU is necessary, and to transmit, to the retransmission buffer 15, the RLC-data-PDU or RLC-data-Sub-PDU for which a determination is made that retransmission thereof is necessary.

Here, for example, the ACK waiting buffer 14 determines whether or not it is necessary for the stored RLC-data-PDU or RLC-data-Sub-PDU to be retransmitted in a case where a STATUS-PDU (NACK) from the RLC sublayer and in a case where a NACK from the MAC sublayer of the receiving-side apparatus are received.

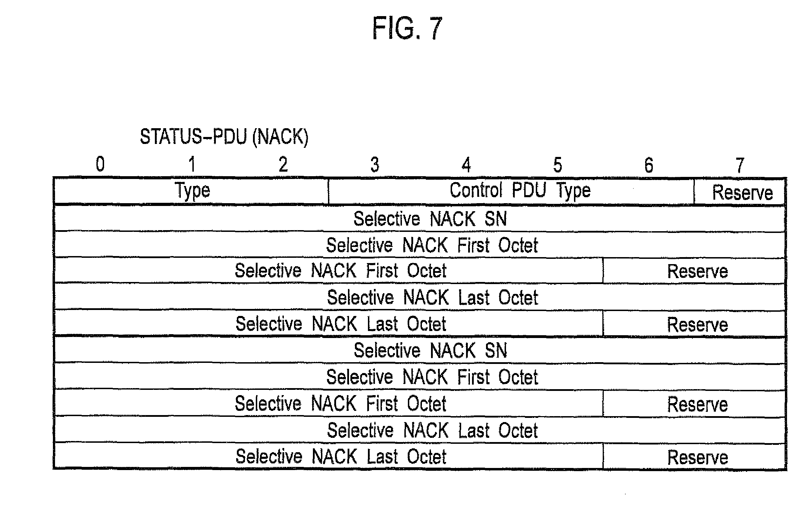

In FIG. 7, a format example of a STATUS-PDU (NACK) used in the mobile communication system according to the present embodiment is shown.

As shown in FIG. 7, the header portion of the STATUS-PDU (NACK) includes a "Type" field and a "Control PDU Type" field. The payload portion of the STATUS-PDU (NACK) includes a "Selective NACK SN" field, a "Selective NACK First Octet" field and a "Selective NACK Last Octet" field.

Here, a payload portion of the STATUS-PDU (NACK) may include multiple sets of "Selective NACK SN" fields, "Selective NACK First Octet" fields and "Selective NACK Last Octet" fields.

The "Control PDU Type" field is a field showing a type (STATUS-PDU (ACK), a STATUS-PDU (NACK) or the like) of the RLC-control-PDU.

The "Selective NACK SN" field is a field showing a sequence number of the RLC-data-PDU for which RLC retransmission has been determined to be necessary in a receive window of the RLC sublayer of the receiving-side apparatus.

The "Selective NACK First Octet" field is a field showing that from which byte (octet) in the RLC-data-PDU specified by the "Selective NACK SN" field needs to be retransmitted.

The "Selective NACK Last Octet" field is a field showing that up to which byte (octet) in the RLC-data-PDU specified by the "Selective NACK SN" field needs to be retransmitted.

In addition, the ACK waiting buffer 14 is configured to determine whether or not specific user data (RLC-data-PDU #X or RLC-data-Sub-PDU #X) is under HARQ retransmission control processing, when receiving a retransmission request "STATUS-PDU (NACK) SN = X" for the specific user data (SN = X).

Then, the ACK waiting buffer 14 is configured not to retransmit the specific user data (RLC-data-PDU #X or RLC-data-Sub-PDU #X), when determining that the specific user data (RLC-data-PDU #X or RLC-data-Sub-PDU #X) is under HARQ retransmission control processing.

In contrast, the ACK waiting buffer 14 is configured to retransmit the specific user data (RLC-data-PDU #X or RLC-data-Sub-PDU #X), when determining that the specific user data (RLC-data-PDU #X or RLC-data-Sub-PDU #X) is not under the HARQ retransmission control processing.
The retransmission buffer 15 is configured to store an RLC-data-PDU or an RLC-data-Sub-PDU from the ACK waiting buffer 14 therein.

The RLC-PDU transmitter unit 16 is configured to transmit, to the MAC sublayer, the RLC-data-PDU transmitted from the segmentation-concatenation processor unit 13 and the RLC-data-PDU stored in the retransmission buffer 15, in a case where a data transmission event is notified from the MAC sublayer.

Here, the RLC-PDU transmitter unit 16 maybe configured to generate an RLC-data-PDU-piggybacked-control-PDU by adding the RLC-control-PDU (STATUS-PDU or the like) stored in the RLC-control-PDU buffer 20 to the RLC-data-PDU to be transmitted, and then to transmit the RLC-data-PDU-piggybacked-control-PDU.

The re-segmentation processor unit 17 is configured to generate multiple RLC-data-Sub-PDUs by segmenting one RLC-data-PDU or RLC-data-Sub-PDU stored in the retransmission buffer 15 in accordance with the communication state of the radio link, that is, in accordance with the allowable amount of transmission data notified by the MAC layer along with the notification. Specifically, the re-segmentation processor unit 17 is configured to perform re-segmentation processing for the RLC-data-PDU or the RLC-data-Sub-PDU stored in the retransmission buffer 15.

In an example in FIG. 4, the re-segmentation processor unit 17 segments an RLC-data-PDU (SN=x) into three RLC-data-Sub-PDUs #A to #C at the first retransmission, and segments the three RLC-data-Sub-PDUs #A to #C into three RLC-data-Sub-PDUs #A1 to #A3, #B1 to #B3 and #C1 to #C3, respectively.

The RLC-PDU transmitter unit 18 is configured to transmit, to the MAC sublayer, the RLC-data-Sub-PDU that has been subjected to the re-segmentation processing by the re-segmentation processor unit 17, in a case where a data transmission event is notified from the MAC sublayer.

Here, the RLC-PDU transmitter unit 16 may be configured to generate an RLC-data-Sub-PDU-piggybacked-control-PDU by adding the RLC-control-PDU (STATUS-PDU or the like) stored in the RLC-control-PDU buffer 20 to the RLC-data-Sub-PDU to be transmitted, and to transmit the RLC-data-Sub-PDU-piggybacked-control-PDU.

The RLC-control-PDU generation unit 19 is configured to generate a STATUS-PDU (ACK/NACK) in accordance with a notification from the reordering buffer 32.

The RLC-control-PDU buffer 20 is configured to store the RLC-control-PDU generated by the RLC-control-PDU generation unit 19.

The de-multiplex unit 31 is configured to extract a STATUS-PDU from the RLC-PDU received from the MAC sublayer, and then to forward the STATUS-PDU to the ACK waiting buffer 14, and also to extract and then to forward an RLC-data-PDU and an RLC-data-Sub-PDU to the reordering buffer 32.

The reordering buffer 32 is configured to perform the reordering processing for the stored RLC-data-PDU.

Specifically, the reordering buffer 32 is configured to cause RLC-data-PDUs (in-sequence) stored in the order of the sequence numbers to be stored in the reassembly buffer 33.

Meanwhile, the reordering buffer 32 is configured to perform RLC-data-PDU loss detection processing using an reordering timer for an RLC-data-PDU (out-of-sequence) not stored in the order of the sequence numbers. The reordering buffer 32 is configured to notify the RLC-control-PDU generation unit 19 that a loss is detected for an unreceived RLC-data-PDU, in a case where such a loss is detected.

The reordering buffer 32 is configured to assemble an RLC-data-PDU, in a case where the RLC-data-PDU can be assembled from stored RLC-data-Sub-PDUs.

The RLC-SDU reassembly unit 34 is configured to assemble and then to transmit RLC-SDUs to an upper layer in the order of the sequence numbers, in a case where the RLC-SDUs can be assembled from the RLC-data-PDUs stored in the reassembly buffer 33.

### (Operations of Mobile Communication System According to the First Embodiment of the Present Invention)

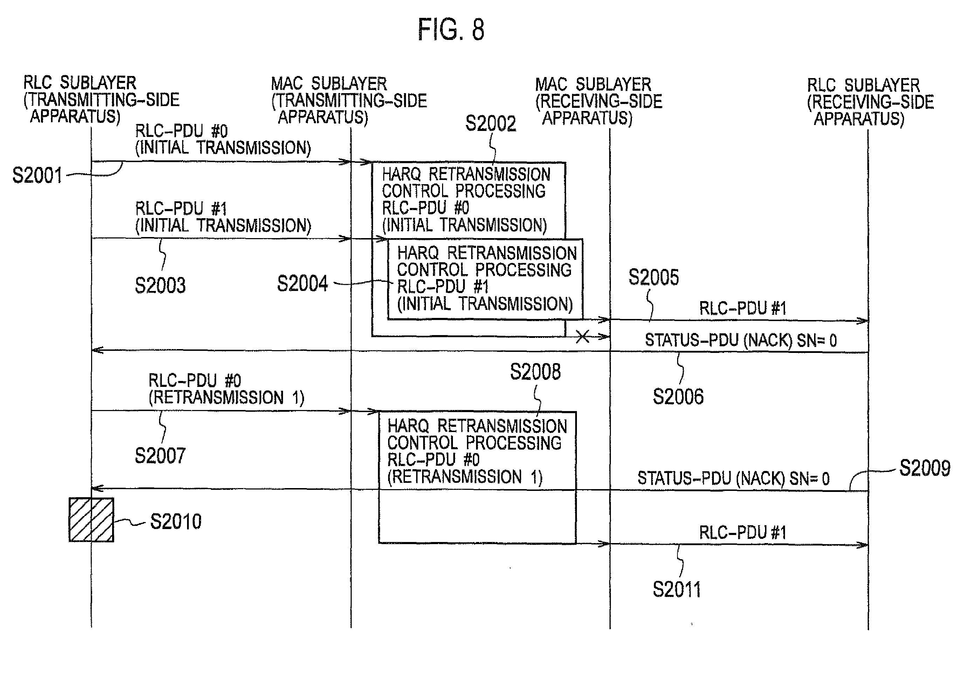

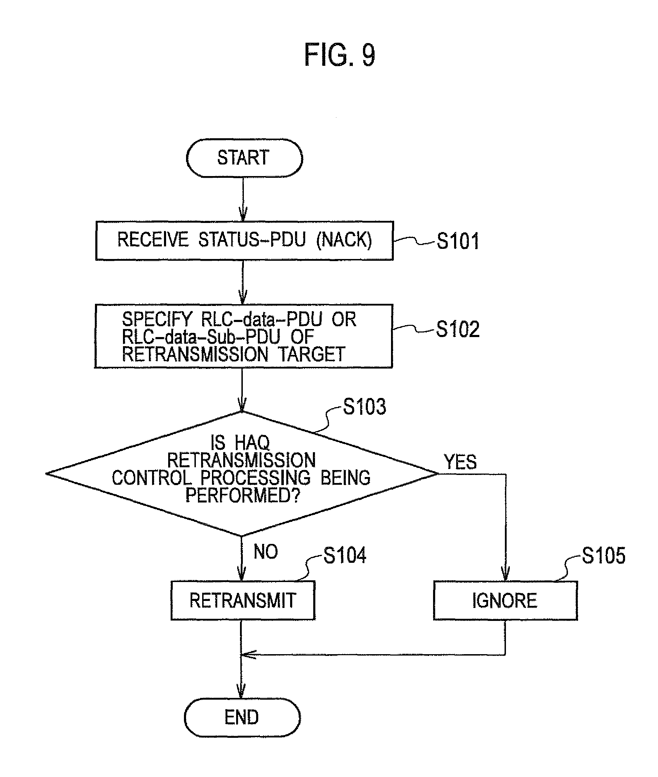

A description will be given of operations of the mobile communication system according to the first embodiment of the present invention with reference to FIGS. 8 and 9. Hereinafter, a description will be given of operations at the time of retransmission control processing in the mobile communication system according to this embodiment with reference to FIGS. 8 and 9.

Operations in steps S2001 to S2009 shown in FIG. 8 are the same as those in steps S1001 and S1009 shown in the aforementioned FIG. 1.

In step S2010, the RLC sublayer of the transmitting-side apparatus determines whether or not to retransmit the RLC-PDU (RCL-data-PDU or RLC-data-Sub-PDU) #0 in response to the received "STATUS-PDU (NACK) SN = 0". The operation of the RLC sublayer of the transmitting-side apparatus in step S201 will be specifically described with reference to FIG. 9.

As shown in FIG. 9, upon receipt of the "STATUS-PDU (NACK)" in step S101, the RLC sublayer of the transmitting-side apparatus analyzes the "STATUS-PDU (NACK) ", and then identifies the RLC-data-PDU or RLC-data-Sub-PDU of the retransmission target in step S102.

In step S103, the RLC sublayer of the transmitting-side apparatus determines whether or not the identified RLC-data-PDCI or RLC-data-Sub-PDU of the retransmission target is under HARQ retransmission control processing in the MAC sublayer.

When determining that it is not under the HARQ retransmission control processing, the RLC sublayer of the transmitting-side apparatus retransmits the RLC-data-PDU or RLC-data-Sub-PDU of the retransmission target in step S104. When determining that it is under the HARQ retransmission control processing, the RLC sublayer of the transmitting-side apparatus ignores the "STATUS-PDU (NACK)", and does not retransmit the RLC-data-PDU or RLC-data-Sub-PDU of the retransmission target in step S105.

As a result of this, in step S2011, the RLC-PDU (RLC-data-PDU or RLC-data-Sub-PDU) #0 can be delivered to the RLC sublayer of the receiving-side apparatus without any redundancy.

### (Effects and Advantages of the Mobile Communication System According to the First Embodiment of the Present Invention)

With the mobile communication system according to the first embodiment of the present invention, in the retransmission control processing in the conventional LTE mobile communication system, the ACK waiting buffer 14 is configured not to retransmit specific user data RLC-PDU #0 in a case of determining that the specific user data RLC-PDU #0 is under HARQ retransmission control processing, even when receiving a retransmission request "STATUS-PSU (NACK) SN = 0" for the specific user data RLC-PDU #0 from the RLC sublayer of the receiving-side apparatus. Thus, it is possible to prevent redundant retransmission of the RLC-PDU #0 and thus to suppress unnecessary consumption of the bandwidth of the radio link.

The present invention has been described above by using the aforementioned embodiments. However, it is obvious to those skilled in the art that the present invention is not limited to the embodiments described in this description. The present invention can be implemented as a revised and modified form without departing from the spirit and scope of the present invention, which are defined by the appended claims. Thus, the contents of this description aim to describe the exemplification, and not to impose any limitation on the present invention.

Note that, the entire contents of Japanese Patent Application No. 2007-100518 (filed on April 6, 2007) are incorporated in this description by reference.

### INDUSTRIAL APPLICABILITY

As described above, the retransmission control method and the transmitting-side apparatus according to the present invention are advantageous because they can prevent redundant retransmission of the RLC-PDU #0 and thus to suppress unnecessary consumption of the bandwidth of the radio link in the retransmission control processing in the conventional LTE mobile communication system.

## Claims

1. A retransmission control method for performing retransmission control processing for user data between a transmitting-side apparatus and a receiving-side apparatus,
wherein
each of the transmitting-side apparatus and the receiving-side apparatus includes a first layer and a second layer that is of a lower layer to the first layer; and
first retransmission control processing is performed between the first layer of the transmitting-side apparatus and the first layer of the receiving-side apparatus, and second retransmission control processing is performed between the second layer of the transmitting-side apparatus and the second layer of the receiving-side apparatus;
the method comprising the steps of:
determining, at the first layer of the transmitting-side apparatus, whether or not specific user data is under the second retransmission control processing, when receiving a retransmission request for the specific user data from the first layer of the receiving-side apparatus, during the first retransmission control processing; and
not retransmitting, at the first layer of the transmitting-side apparatus, the specific user data, when determining that the specific user data is under the second retransmission control processing.

2. The retransmission control method according to the claim 1, wherein
the first layer is an RLC sublayer; and
the second layer is a MAC sublayer.

3. The retransmission control method according to the claim 2, wherein
the second retransmission control processing is HARQ retransmission control processing.

4. A transmitting-side apparatus configured to perform retransmission control processing for user data, with a receiving-side apparatus, comprising:
a first layer; and
a second layer that is of a lower layer to the first layer;
wherein
first retransmission control processing is configured to be performed with a first layer of the receiving-side apparatus, and second retransmission control processing is configured to be performed with a second layer of the receiving-side apparatus;
the first layer of the transmitting-side apparatus is configured to determine whether or not specific user data is under the second retransmission control processing, when receiving a retransmission request for the specific user data from the first layer of the receiving-side apparatus, during the first retransmission control processing, and
the first layer of the transmitting-side apparatus is configured not to retransmit the specific user data, when determining that the specific data is under the second retransmission control processing.

5. The transmitting-side apparatus according to claim 4
wherein
the first layer of the transmitting-side apparatus is an RLC sublayer; and
the second layer of the transmitting-side apparatus is a MAC sublayer.

6. The transmitting-side apparatus according to claim 5
wherein
the second retransmission control processing is HARQ retransmission control processing.
